# DEMANDE DE BREVET EUROPEEN

(11) **EP 3 502 995 A1**
(43) Date de publication de la demande: **26.06.2019**
(21) Numéro de dépôt: 18215114.2
(22) Date de dépôt: 21.12.2018
(51) Int. Cl.: G06Q 20/32, G06Q 20/34

(54) **COLLECTE DE DONNEES D'HISTORIQUE DE TRANSACTION SUR UN TERMINAL**

(30) Priorité: 22.12.2017 FR 1763185
(71) Demandeur: IDEMIA France, 92400 Courbevoie (FR)
(72) Inventeur: VAURES, Pierre, 92400 COURBEVOIE (FR); VILAIN, Antoine, 92400 COURBEVOIE (FR); MOUROUX, Benoit, 92400 COURBEVOIE (FR); CHAMBEROT, Francis, 92400 COURBEVOIE (FR)
(74) Mandataire: Cabinet Beau de Loménie

(57) **Abrégé**

L'invention concerne un procédé de traitement mis en oeuvre par un terminal (T), comprenant : collecte en ligne, depuis un serveur distant (SV), de premières données d'historique (DT) représentatives d'au moins une transaction associée à un compte d'utilisateur (15) ; communication en sans contact avec une carte à puce (2) au cours de laquelle le terminal (T) récupère des deuxièmes données d'historique (DH) stockées localement dans une mémoire (10) de la carte à puce, ces deuxièmes données d'historique étant représentatives de transactions traitées par la carte à puce en association avec le compte d'utilisateur (15) ; et analyse au cours de laquelle le terminal (T) agrège les premières et deuxièmes données d'historique pour obtenir des données d'historique à jour. Il est ainsi possible de générer des données de suivi de transaction à partir des données d'historique à jour.

## Description

La présente invention se situe dans le domaine général des terminaux et concerne plus particulièrement la consultation, à partir d'un terminal, de données représentatives d'un historique de transaction, dans le domaine bancaire par exemple.

De manière connue, le porteur d'une carte bancaire peut utiliser sa carte pour réaliser des transactions bancaires, telles que des transactions de paiement par exemple, en association avec un compte bancaire. L'utilisateur peut en outre suivre l'état de son compte bancaire (solde, montant et dates des transactions) à l'aide de relevés émis régulièrement par sa banque.

Cependant, il est aujourd'hui difficile pour le porteur d'une carte bancaire de faire un suivi en temps réel des transactions qu'il réalise en association avec un compte bancaire. Un temps d'attente plus ou moins important est requis pour que la banque traite les transactions récentes réalisées à l'aide d'une carte bancaire puis pour émettre un nouveau relevé prenant en compte ces transactions récentes.

Un relevé mensuel est destiné à dresser un bilan sur une période de temps passée mais n'est pas conçu pour fournir des d'informations sur le statut en temps réel d'un compte bancaire. La consultation en ligne du solde d'un compte ou des transactions réalisées en association avec un compte est parfois possible mais les informations fournies par la banque ne sont pas toujours exhaustives.

Il n'existe donc pas aujourd'hui de solution satisfaisante pour permettre à un utilisateur d'une carte bancaire, et plus généralement d'une carte à puce, d'obtenir des informations fidèles et à jour sur l'état d'un compte d'utilisateur associé à cette carte. En particulier, un besoin existe pour permettre un suivi en temps réel de l'état d'un compte bancaire associé à une carte bancaire.

### Objet et résumé de l'invention

A cet effet, la présente invention concerne un procédé de traitement mis en oeuvre par un terminal, ledit procédé comprenant les étapes suivantes :
- collecte en ligne, depuis un serveur distant, de premières données d'historique représentatives d'au moins une transaction associée à un compte d'utilisateur ;
- communication en sans contact avec une carte à puce au cours de laquelle le terminal récupère des deuxièmes données d'historique stockées localement dans une mémoire de la carte à puce, lesdites deuxièmes données d'historique étant représentatives d'au moins une transaction traitée par la carte à puce en association avec le compte d'utilisateur ;
- analyse au cours de laquelle le terminal agrège les premières données d'historique avec les deuxièmes données d'historique pour obtenir des données d'historique à jour ; et
- génération de données de suivi de transaction à partir des données d'historique à jour.

L'invention permet avantageusement à un utilisateur d'une carte bancaire, et plus généralement d'une carte à puce, d'obtenir des informations fidèles et à jour sur l'état d'un compte d'utilisateur associé à cette carte. En particulier, l'utilisateur peut obtenir un suivi en temps réel de l'état d'un compte bancaire associé à une carte bancaire. Ce suivi en temps-réel est possible car les données de compte collectées en ligne sont mises à jour à partir des transactions récentes réalisées à l'aide de la carte à puce de l'utilisateur. La consultation en ligne de l'état du compte, via par exemple un portail Internet, ne permet pas à elle seule d'obtenir des informations sur l'état courant du compte si des transactions récentes traitées par la carte à puce n'ont pas encore été prises en compte par la banque.

Selon un mode de réalisation particulier, l'étape d'analyse comprend une comparaison des premières données d'historique collectées en ligne avec les deuxième données d'historique récupérés lors de l'étape de communication pour détecter au moins une nouvelle transaction dans les deuxièmes données d'historique qui n'est pas incluses dans les premières donnés de transaction ; et
une agrégation des données d'historique de ladite au moins une nouvelle transaction avec les premières données d'historique de sorte à obtenir des données d'historique à jour.

Selon un mode de réalisation particulier, les deuxièmes données d'historique récupérées lors de l'étape de communication satisfont une condition temporelle prédéterminée.

Selon un mode de réalisation particulier, les données de suivi de transactions sont représentatives d'un état courant du compte d'utilisateur.

Selon un mode de réalisation particulier, le terminal est un terminal de communication apte à recevoir des messages SMS selon le protocole de paiement 3DS,
le procédé comprenant une étape de réception de troisièmes données d'historique par l'intermédiaire d'au moins un message SMS ;
dans lequel, lors de l'étape de mise à jour, les premières données d'historique sont mises à jour à partir des deuxièmes et troisièmes données d'historique.

Selon un mode de réalisation particulier, l'étape de communication comprend :
- une première lecture au cours de laquelle le terminal consulte un premier fichier d'historisation de la carte à puce pour récupérer des deuxièmes données d'historique stockées dans un premier format de données ; et
- une deuxième lecture au cours de laquelle le terminal consulte un deuxième fichier d'historisation de la carte à puce pour récupérer des deuxièmes données d'historique stockées dans un deuxième format de données, réduit en taille par rapport au premier format de données.

Selon un mode de réalisation particulier, le premier fichier d'historisation comprend au moins une entrée comportant des premières données d'historique, selon le premier format de données, représentatives d'une transaction respective,
dans lequel le deuxième fichier d'historisation comprend au moins une entrée comportant des premières données d'historique, selon le deuxième format de données, représentatives d'une transaction respective ;
dans lequel, lors des première et deuxième lectures, le terminal lit une à une chaque entrée dans le premier fichier d'historisation et dans le deuxième fichier d'historisation tant que l'entrée lue correspond à une transaction satisfaisant une condition temporelle prédéterminée, de sorte que les deuxièmes données d'historique récupérées lors de l'étape de communication satisfont la condition temporelle prédéterminée.

Selon un mode de réalisation particulier, le terminal détecte que des deuxièmes données d'historique satisfont la condition temporelle si elles sont représentatives d'une transaction réalisée à un instant postérieur à un instant fixe prédéterminée.

Selon un mode de réalisation particulier, le terminal détecte que des deuxièmes données d'historique satisfont la condition temporelle si elles sont représentatives d'une transaction réalisée à un instant se trouvant dans une période de temps, d'une durée prédéfinie, terminant à un instant courant au cours duquel est réalisée l'étape de communication.

Selon un mode de réalisation particulier, le deuxième fichier d'historisation stocké dans la carte à puce comprend au moins une première entrée, correspondant à une première transaction, et au moins une deuxième entrée antérieure correspondant à une deuxième transaction antérieure à la première transaction, la première entrée étant codée selon le deuxième format de données à partir de ladite au moins une deuxième entrée,
la deuxième lecture comprenant une étape d'interprétation de la première entrée récupérée dans le deuxième format de données, à partir de la deuxième entrée.

Selon un mode de réalisation particulier, lesdites données d'historique caractérisent des transactions de paiement, de type EMV par exemple.

Dans un mode particulier de réalisation, les différentes étapes du procédé traitement sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre par un terminal, ou plus généralement par un ordinateur, ce programme comportant des instructions adaptées à la mise en oeuvre des étapes d'un procédé de traitement tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un terminal apte à mettre en oeuvre le procédé de traitement de l'invention. Plus particulièrement, l'invention vise également un terminal comprenant :
- un module de collecte configuré pour collecter en ligne, depuis un serveur distant, des premières données d'historique représentatives d'au moins une transaction associé à un compte d'utilisateur ;
- un module de communication configuré pour communiquer en sans contact avec une carte à puce pour récupérer des deuxièmes données d'historique stockées localement dans une mémoire de la carte à puce, lesdites deuxièmes données d'historique étant représentatives d'au moins une transaction traitée par la carte à puce en association avec le compte d'utilisateur ;
- un module d'analyse configuré pour agréger les premières données d'historique avec les deuxièmes données d'historique pour obtenir des données d'historique à jour ; et
- un module de génération configuré pour générer des données de suivi de transaction à partir des données d'historique à jour.

A noter que les différents modes de réalisation mentionnés ci-avant en relation avec le procédé de traitement de l'invention ainsi que les avantages associés s'appliquent de façon analogue au terminal de l'invention.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel peut être exécuté par un processeur de données d'une entité physique (terminal, carte à puce etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un environnement comprenant un terminal apte à coopérer avec une carte à puce et avec un serveur distant, selon un mode de réalisation particulier de l'invention ;
- la figure 2 représente schématiquement la structure d'un terminal, selon un mode de réalisation particulier de l'invention ;
- la figure 3 représente schématiquement des modules fonctionnels mis en oeuvre par un terminal, selon un mode de réalisation particulier de l'invention ;
- la figure 4 représente, sous forme d'un diagramme, les étapes d'un procédé de traitement, selon un mode de réalisation particulier de l'invention ;
- les figures 5A et 5B représentent schématiquement un premier fichier d'historisation et un deuxième fichier d'historisation, selon un mode de réalisation particulier de l'invention ;
- les figures 6A et 6B représentent schématiquement des données d'historisation conformes respectivement à un premier format de données et à un deuxième format de données, selon un mode de réalisation particulier de l'invention ;
- la figure 7 représente, sous forme d'un diagramme, les étapes d'un procédé de traitement, selon un mode de réalisation particulier de l'invention ;
- les figures 8A et 8B représentent schématiquement la vérification qu'une condition temporelle est remplie, selon des modes de réalisation particuliers ;
- la figure 9 représente, sous forme d'un diagramme, les étapes d'un procédé de traitement, selon un mode de réalisation particulier de l'invention ; et
- les figures 10A et 10B représentent schématiquement le contenu d'entrées dans un deuxième fichier d'historisation selon un deuxième format de données, conformément à des modes de réalisation particuliers de l'invention.

### Description détaillée de plusieurs modes de réalisation

Comme indiqué précédemment, la présente invention concerne des terminaux et porte plus particulièrement sur la consultation, à partir d'un terminal, de données représentatives d'un historique de transaction, dans le domaine bancaire par exemple.

L'invention propose un procédé de traitement permettant à un terminal d'obtenir des données d'historique, fidèles et à jour, représentant l'état d'un compte d'utilisateur auquel est associé une carte à puce qu'un utilisateur peut utiliser pour réaliser des transactions.

A cette fin, l'invention prévoit un procédé de traitement mis en oeuvre par un terminal, ce procédé comprenant les étapes suivantes : collecte en ligne, depuis un serveur distant, de premières données d'historique représentatives d'au moins une transaction associée à un compte d'utilisateur ; communication en sans contact avec une carte à puce au cours de laquelle le terminal récupère des deuxièmes données d'historique stockées localement dans une mémoire de la carte à puce, ces deuxièmes données d'historique étant représentatives d'au moins une transaction traitée par la carte à puce en association avec le compte d'utilisateur ; et analyse au cours de laquelle le terminal agrège les premières données d'historique avec les deuxièmes données d'historique pour obtenir des données d'historique à jour. Le terminal peut ainsi générer des données de suivi de transaction à partir des données d'historique à jour, ces données de suivi de transaction donnant des informations à jour sur l'état du compte d'utilisateur.

L'invention porte également sur un terminal configuré pour mettre en oeuvre un tel procédé de traitement.

Dans le présent exposé, des exemples de mises en oeuvre de l'invention sont décrits en relation avec un terminal configuré pour récolter des données d'historique de transaction depuis une carte bancaire de type EMV (pour « *Europay Mastercard* Visa »). EMV est le protocole standardisé utilisé aujourd'hui majoritairement dans le monde pour sécuriser notamment les transactions de paiement effectuées par des cartes à puce.

A noter toutefois que l'invention ne se limite par exclusivement aux transactions EMV mais s'applique plus généralement à tous terminaux ou dispositifs électroniques configurés pour lire des données d'historique stockées dans une carte à puce qui utilise le protocole EMV ou tous autres standards de transaction pour réaliser de quelconques transactions.

A noter également que la notion de transaction est ici entendue au sens large et comprend par exemple, des transactions d'authentification ou, dans le domaine bancaire, des transactions de paiement ou de transfert.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

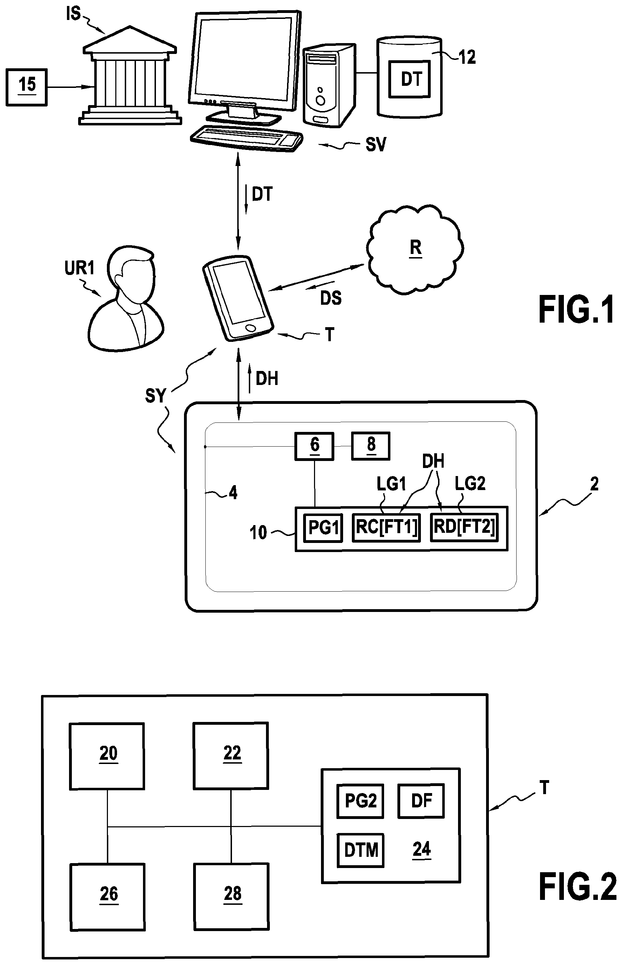

La **figure 1** représente schématiquement un environnement comportant une carte à puce 2 d'un utilisateur UR1, un terminal T et un serveur distant SV. Le terminal T est configuré pour communiquer avec d'une part, le serveur distant SV et, d'autre part, avec la carte à puce 2.

Comme déjà indiqué, on suppose ici que la carte à puce 2 est une carte EMV, telle qu'une carte de paiement par exemple. La carte bancaire 2 est par exemple conforme à la norme ISO 7816. Dans les exemples de réalisation décrits ci-après, le porteur UR1 utilise sa carte bancaire pour réaliser des transactions de paiement.

Plus précisément, la carte à puce 2 comporte une antenne radiofréquence 4, un processeur 6, une mémoire volatile réinscriptible (de type RAM) 8 et une mémoire non volatile réinscriptible 10 (de type Flash par exemple).

Le processeur 6 peut traiter des transactions en communiquant en mode sans contact avec des lecteurs en utilisant l'antenne radiofréquence 4. Selon une variante, la carte à puce 2 comporte également des contacts externes (non représentés) que le processeur 6 peut utiliser pour communiquer par contact avec des lecteurs pour réaliser des transactions.

Le processeur 6 est également configuré pour communiquer en mode sans contact avec le terminal T en utilisant l'antenne radiofréquence 4.

La mémoire non-volatile 10 constitue dans cet exemple un support d'enregistrement (ou support d'informations) conforme à un mode de réalisation particulier, lisible par la carte à puce 2, et sur lequel est enregistré un programme d'ordinateur PG1 conforme à un mode de réalisation particulier.

Toujours dans l'exemple considéré ici, la mémoire non volatile réinscriptible 10 est configurée pour stocker des données d'historisation (ou données d'historique) DH représentatives de transactions traitées par la carte à puce 2 au fil du temps, à savoir des transactions de paiement dans cet exemple. Selon un exemple particulier représenté en **figure 1**, la mémoire 10 comporte à cette fin deux fichiers d'historisation : un premier fichier d'historisation (ou fichier primaire d'historisation) LG1 configuré pour enregistrer des données d'historisation DH selon un premier format FT1 de données et un deuxième fichier d'historisation (ou fichier secondaire d'historisation) LG2 configuré pour enregistrer des données d'historisation DH selon un deuxième format FT2 de données, distinct du premier format FT1. Comme expliqué par la suite, le deuxième format FT2 de données est réduit en taille (compressé) par rapport au premier format FT1de données. Ainsi, le deuxième format FT2 ne permet de stocker que certaines des données d'historisation définies par le premier format de données FT1.

Ces premier et deuxième fichiers d'historisation LG1, LG2 correspondent dans cet exemple à des zones mémoires distinctes.

Des variantes de réalisation n'impliquant pas ces deux fichiers d'historisation LG1 et LG2 distincts sont toutefois possibles dans le cadre de l'invention. Selon une variante, toutes les données d'historique DH sont stockées localement dans un même fichier d'historisation, soit dans un même format, soit dans les formats FT1 et FT2 mentionnés ci-avant.

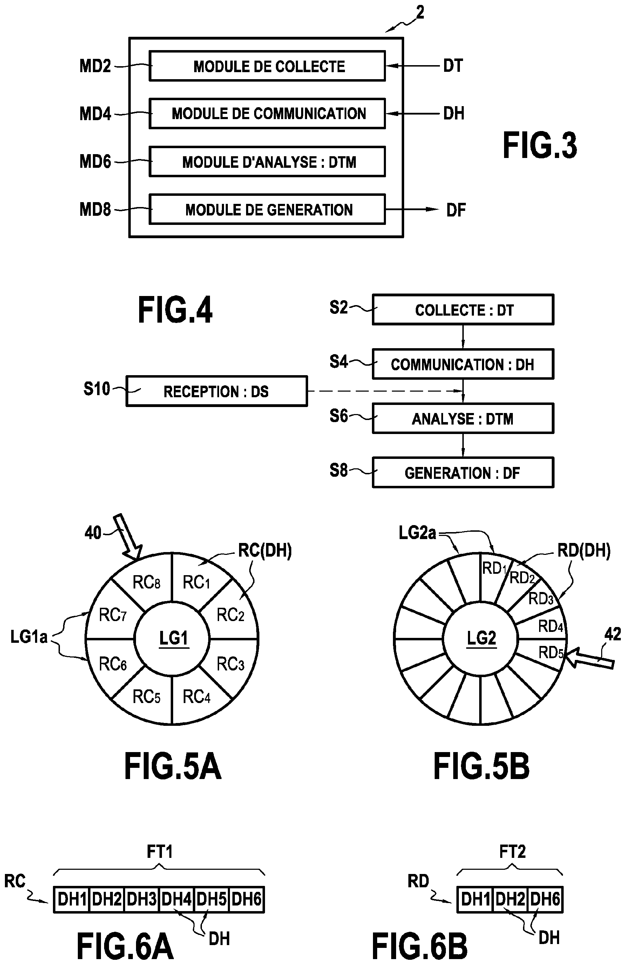

Les fichiers d'historisation LG1 et LG2 (appelés aussi « *Log* » en anglais) représentés en **figure 1** sont décrits plus en détail ci-après en référence notamment aux **figures 5A-****5B**, selon un exemple particulier de réalisation.

La carte à puce 2 est par exemple configurée pour traiter une transaction courante avec un terminal quelconque et pour mémoriser de nouvelles données d'historisation DH représentatives d'une transaction courante dans le premier fichier d'historisation LG1 selon le premier format FT de données et, si besoin, pour transférer d'anciennes données d'historisation stockées depuis le premier fichier d'historisation LG1 dans le deuxième fichier d'historisation LG2 afin qu'elles y soient sauvegardées dans le deuxième format FT2 de données. Ce mécanisme de sauvegarde dans le deuxième fichier d'historisation LG2 est par exemple déclenché par la carte à puce 2 si l'enregistrement à venir des nouvelles données d'historisation DH dans le premier fichier LG1 selon le premier format FT1 est considéré comme critique vis-à-vis d'anciennes données d'historisation stockées dans le premier fichier d'historisation LG1.

De manière générale, la carte à puce 2 peut appliquer divers critères basée sur au moins une condition prédéfinie pour déterminer si d'anciennes données d'historisation présentes dans le premier fichier d'historisation LG1 doivent faire l'objet d'un transfert de sauvegarde selon le format FT2 dans le fichier LG2.

A titre d'exemple, si la carte à puce 2 détecte, avant d'enregistrer dans le premier fichier d'historisation LG1 de nouvelles données d'historisation DH d'une transaction en cours selon le premier format FT1, que cet enregistrement remplit au moins une condition prédéterminée indiquant qu'il est critique vis-à-vis d'anciennes données d'historisation déjà stockées dans le premier fichier d'historisation LG1 selon le premier format FT1, alors la carte transfert ces anciennes données d'historisation dans le deuxième fichier d'historisation LG2 afin qu'elles y soient stockées selon le format réduit FT2. Ce transfert permet d'éviter un risque immédiat ou futur que ces anciennes données d'historisation soient perdues suite à l'enregistrement dans le premier fichier d'historisation LG1 des nouvelles données d'historisation DH selon le premier format FT1.

Comme déjà indiqué, divers critères de décision peuvent être appliqués par la carte à puce 2 pour déterminer si un tel mécanisme de sauvegarde doit être déclenché. La manière dont la carte à puce 2 prend cette décision peut être adaptée selon le cas d'espèce par l'homme du métier et ne sera pas décrit d'avantage dans ce document.

Par ailleurs, le serveur distant SV est ici géré par une entité tierce (une banque dans cet exemple) noté IS qui est également l'émetteur de la carte bancaire 2, bien que des variantes soient possibles. Dans cet exemple, la banque IS gère un compte bancaire 15 de l'utilisateur UR1. De manière générale, le compte bancaire 15 constitue un compte d'utilisateur au sens de l'invention, l'état de ce compte étant caractérisé par des données d'historique DT, dites aussi données de compte. Ces données de compte DT sont représentatives d'au moins une transaction réalisée en association avec le compte d'utilisateur 15, au moyen de la carte bancaire 2 ou par tout autre moyen approprié (transaction par Internet, chèque...). Dans cet exemple, ces transactions sont des transactions bancaires, telles que des transactions de paiement ou des virements bancaires par exemple.

La banque IS enregistre ces données de compte DT dans une base de données 12 accessible par le serveur distant SV.

Le terminal T est configuré pour interroger le serveur distant SV de sorte à récupérer des données de compte DT stockées dans la base de données 12. D'autre part, le terminal T peut être utilisé pour récupérer des données d'historique DH stockées localement dans la mémoire 10 de la carte à puce 2.

Le terminal T peut être un quelconque dispositif électronique capable de réaliser le procédé de l'invention décrit dans ce document, tel que par exemple un ordinateur, un smartphone ou une tablette.

Le terminal T est en particulier configuré pour communiquer avec le serveur distant SV, au travers par exemple d'un réseau tel qu'Internet, pour récupérer des données de compte DT et pour communiquer en mode sans contact avec la carte à puce 2 pour récupérer des données d'historique DH.

Selon un exemple particulier, le terminal T est configuré pour recevoir en outre des messages SMS depuis un réseau téléphonique R selon le protocole de paiement 3DS (pour « *3-D Secure* »), ces messages comportant des troisièmes données d'historique représentatives d'au moins une transaction réalisée en association avec le compte d'utilisateur 15.

La **figure 2** représente schématiquement la structure du terminal T illustré en **figure 1**, selon un mode de réalisation particulier.

Plus précisément, le terminal T comprend dans cet exemple un processeur 20, une mémoire volatile réinscriptible (de type RAM) 22, une mémoire non volatile réinscriptible 24 (de type Flash par exemple), une première interface de communication 26 et une deuxième interface de communication 28.

La mémoire non-volatile 24 constitue dans cet exemple un support d'enregistrement (ou support d'informations) conforme à un mode de réalisation particulier, lisible par le terminal T, et sur lequel est enregistré un programme d'ordinateur PG2 conforme à un mode de réalisation particulier. Ce programme d'ordinateur PG2 comporte des instructions pour l'exécution des étapes d'un procédé de traitement selon un mode de réalisation particulier. Les étapes de ce procédé sont décrites ultérieurement, dans des modes de réalisation particuliers de l'invention.

La mémoire non volatile 24 peut également stocker diverses données intervenant lors de la mise en oeuvre du procédé de traitement, notamment des données d'historique DTM à jour obtenues à partir des données de compte DT et des données d'historique DH, ou encore des données DF de suivi de transaction. La nature et l'usage de ces données sont décrits en détail ultérieurement.

Dans cet exemple, le terminal T comprend en outre deux interfaces de communication 26 et 28.

La première interface de communication 26 permet ici au terminal T de communiquer en sans contact avec la carte à puce 2. Il s'agit ici par exemple d'une communication en champ proche conforme au standard NFC (pour « *Near Field Communication* »). Pour ce faire, la première interface de communication 26 peut comporter notamment une antenne radiofréquence et un émetteur-récepteur. La manière dont un tel terminal communique en mode sans contact avec une carte à puce EMV est connu en soit et ne sera donc pas décrit en détail dans ce document.

La deuxième interface de communication 28 permet au terminal T de communiquer avec le serveur distant SV afin de récupérer les données de compte DT. Cette communication est réalisée au travers par exemple d'un réseau de communication, tel qu'Internet ou autre.

A noter que certains éléments généralement présents dans un terminal ou dans une carte à puce EMV ont été volontairement omis car ils ne sont pas nécessaires à la compréhension de la présente invention. A noter également que le terminal T représenté en **figures 1** et **2** ne constitue qu'un exemple de réalisation, d'autres mises en oeuvre étant possibles dans le cadre de l'invention. L'homme du métier comprend en particulier que certains éléments du terminal ne sont décrits dans ce document que pour faciliter la compréhension de l'invention, ces éléments n'étant pas nécessaires pour mettre en oeuvre l'invention.

Toujours en référence au terminal T, le processeur 20 piloté par le programme d'ordinateur PG2, met ici en oeuvre un certain nombre de modules représentés en **figure 3**, à savoir : un module de collecte MD2, un module de communication MD4, un module d'analyse MD6 et éventuellement un module de génération MD8.

Comme illustré en **figures 1-3**, le module de collecte MD2 est configuré dans cet exemple pour collecter en ligne, depuis le serveur distant SV, des premières données d'historique DT, dites données de compte, représentatives d'au moins une transaction réalisée en association avec le compte d'utilisateur 15.

Le module de communication MD4 est configuré pour communiquer en sans contact avec la carte à puce 2 pour récupérer des données d'historique DH stockées localement dans la mémoire 10 de la carte à puce, ces données d'historique DH étant représentatives d'au moins une transaction traitée par la carte à puce 2 en association avec le compte d'utilisateur 15.

Le module d'analyse MD6 est configuré pour agréger les données de compte DT obtenues par le module de collecte MD2 avec les données d'historique DH obtenues par le module de communication MD, de sorte à obtenir des données d'historique DTM à jour représentatives de transactions réalisées en association avec le compte d'utilisateur 15.

Le module de génération MD8 est configuré pour générer des données DF de suivi de transaction à partir des données d'historique DTM à jour. Ces données DF de suivi de transaction sont représentatives de l'état du compte d'utilisateur 15 et peuvent comporter notamment un solde à jour du compte ou une liste à jour de transactions, comme décrit ultérieurement.

La configuration et le fonctionnement des modules MD2 à MD8 du terminal T apparaîtront plus précisément dans les exemples de réalisation décrits. On comprend toutefois que les modules MD2 à MD8 tels que représentés en **figure 3** ne représentent qu'un exemple de mise en oeuvre non limitatif de l'invention.

La **figure 4** représente les étapes réalisées par le terminal T illustrées en **figures 1-****3** lors d'un procédé de traitement conforme à un mode de réalisation particulier de l'invention. Pour ce faire, le terminal T met en oeuvre le procédé de traitement en exécutant le programme PG1.

On suppose que l'utilisateur UR1 a réalisée des transactions de paiement EMV à l'aide de sa carte à puce 2 et souhaite à présent consulter le solde dynamique de son compte d'utilisateur 15. On suppose que certaines transactions récentes réalisées au moyen de la carte à puce 2 n'ont à ce stade par encore été prises en compte par la banque IS dans les données de compte DT représentant l'état du compte 15.

Au cours d'une étape S2 de collecte, le terminal collecte en ligne, depuis le serveur distant SV, des premières données d'historique DT, dites données de compte, représentatives d'au moins une transaction associée au compte d'utilisateur 15. Pour ce faire, le terminal T communique avec le serveur distant SV afin que ce dernier interroge sa base de données 12 et renvoie les données de compte DT pertinentes. Chaque transaction spécifiée dans ces données de compte DT peut avoir été réalisée en utilisant la carte à puce 2 ou via d'autres moyens appropriés liés au compte d'utilisateur 15.

Au cours d'une étape S4 de communication, le terminal T communique en mode sans contact avec la carte à puce 2 en présentant par exemple son terminal T à proximité de la carte à puce 2. Au cours de cette communication sans contact, le terminal T récupère les données d'historique DH stockées localement dans la mémoire 10 de la carte à puce 2, ces données d'historique étant représentatives d'au moins une transaction traitée par la carte à puce 2 en association avec le compte d'utilisateur 15.

Le terminal T agrège (ou combine) ensuite, lors d'une étape S6 d'analyse, les données de compte DT avec les données d'historique DH pour obtenir des données d'historique DTM à jour. On suppose ici que les données de compte DT obtenues en S2 et les données d'historique DH obtenues en S4 sont différentes du fait des récentes transactions réalisées au moyen de la carte à puce 2 et qui n'ont pas encore été prises en compte par la banque IS. Autrement dit, les données d'historique DH spécifient par exemple au moins une transaction, réalisée par la carte à puce 2, qui n'est pas spécifiée dans les données de compte DT.

Au cours de cette étape S6 d'analyse, le terminal T peut par exemple : comparer les données de compte DT collectées en ligne (S2) avec les données d'historique DH récupérés lors de la communication sans contact S4 pour détecter au moins une nouvelle transaction dans les données d'historique DH qui n'est pas spécifiée dans les données de compte DT, puis combiner les données d'historique de ladite au moins une nouvelle transaction aux données de compte DT de sorte à obtenir les données d'historique DTM à jour.

Le cas échéant, le terminal T peut en outre générer (S8) des données de suivi de transaction DF à partir des données d'historique DTM à jour obtenues en S6. Ces données de suivi de transaction sont ici représentatives d'un état courant du compte d'utilisateur 15. Ces données de suivi de transaction peuvent comporter tout ou partie des données d'historique DTM à jour (par exemple une liste à jour de transactions réalisées en association avec le compte 5), ou encore un indicateur à jour tel que le solde courant du compte d'utilisateur 15.

L'invention permet avantageusement à un utilisateur d'une carte bancaire, et plus généralement d'une carte à puce, d'obtenir des informations fidèles et à jour sur l'état d'un compte d'utilisateur associé à cette carte. En particulier, l'utilisateur peut obtenir un suivi en temps réel de l'état d'un compte bancaire associé à une carte bancaire. Ce suivi en temps-réel est possible car les données de compte collectées en ligne sont mises à jour à partir des transactions récentes réalisées à l'aide de la carte à puce de l'utilisateur. La consultation en ligne de l'état du compte, via par exemple un portail Internet, ne permet pas à elle seule d'obtenir des informations sur l'état courant du compte si des transactions récentes traitées par la carte à puce n'ont pas encore été prises en compte par la banque.

L'invention permet ainsi à l'utilisateur d'obtenir un solde en temps réel de son compte 15 ou obtenir une liste à jour des récentes transactions réalisées en association avec son compte 5. L'obtention d'une telle liste permet notamment à l'utilisateur de détecter si deux transactions successives ont été effectuées par erreur en association avec son compte lors d'un achat avec sa carte bancaire, par exemple.

A noter que dans l'exemple représenté en **figure 1****,** les données d'historisation DH sont stockées dans les deux fichiers d'historisations distincts LG1 et LG2, selon deux format de données distincts FT1 et FT2, dans lequel FT2 est un format compressé (c.-à-d. réduit en taille) par rapport au format FT1. L'invention peut toutefois aussi s'appliquer dans le cas où toutes les données d'historisation DH récupérées en S4 (**figure 4**) par le terminal T sont stockées localement dans un seul fichier d'historisation, selon un ou plusieurs formats de données distinct.

Par ailleurs, il est possible de faire communiquer le terminal en S4 (**figure 4**) avec une pluralité de cartes à puce de l'utilisateur afin de prendre en compte des transactions réalisées par plusieurs cartes liées à un même compte.

Selon un exemple de réalisation particulier, lors de l'étape S4 de communication (**figure 4**), le terminal T interroge la carte à puce 2 de sorte à ne récupérer que des données d'historique DH qui remplissent une condition temporelle prédéterminée. Chaque transaction, correspondant aux données d'historique DH récupérées en S4, est par exemple caractérisée dans le temps par un instant postérieur à un instant fixe prédéterminé. Selon un autre exemple, chaque transaction correspondant aux données d'historique DH récupérées en S4 est caractérisée par un instant se trouvant dans une période de temps, d'une durée prédéterminée, se terminant à un instant courant au cours duquel est réalisé le procédé de traitement de l'invention.

Le terme « instant » désigne dans ce document une date et/ou une heure ou, plus généralement, une quelconque indication d'une position dans le temps (indication temporelle). On suppose que chaque transaction considérée dans ce document est réalisée à un instant t donné qui est défini dans les données d'historique correspondantes. L'instant courant au sens de l'invention est défini comme un instant au cours duquel le procédé de l'invention est réalisé, la manière dont cet instant courant est déterminé par le terminal T étant laissé au libre choix de l'homme du métier. Dans un exemple particulier, le terminal T met en oeuvre une horloge interne ou reçoit une indication de la date et/ou l'heure depuis l'extérieur.

La prise en compte d'une condition temporelle comme mentionné ci-dessus permet avantageusement au terminal de limiter le volume de données d'historique récupéré lors de l'étape S4 de communication, et donc d'accélérer le processus et de diminuer les ressources requises au niveau du terminal T et de la carte à puce 2. Le terminal T peut ainsi récupérer uniquement les données d'historique DH pertinentes, c'est-à-dire celles correspondant aux transactions les plus récentes qui sont susceptibles de ne pas avoir encore été prises en compte à ce stade dans les données de compte DT du compte d'utilisateur 15. Le terminal T récupère par exemple en S4 toutes les données d'historique DH correspondant à des transactions réalisées dans le mois calendaire courant ou dans un période glissante, d'une durée d'un mois, se terminant à la date courante.

Des exemples de prise en compte d'une telle condition temporelle lors de l'étape S4 de communication sont décrits plus en détail ultérieurement.

Comme représenté en **figure 4**, selon un exemple de réalisation particulier, le terminal T reçoit (S10) en outre des données d'historique DS, dites troisièmes données d'historique, par l'intermédiaire d'au moins un message SMS. Ces messages SMS sont reçus selon le protocole 3DS connu de l'homme du métier. Chaque message SMS peut comprendre des données d'historique caractérisant au moins une transaction réalisée par l'utilisateur UR1 en association avec le compte d'utilisateur 15. Lors de l'étape S6 d'analyse, les données de compte DT sont mises à jour à partir à la fois des deuxièmes données d'historique DH provenant de la carte à puce 2 et des troisième données d'historique DS obtenues via le mécanisme 3DS.

Cette variante permet d'obtenir en S6 des données d'historique DTM à jour plus complètes dans la mesure où elles prennent également en compte des transactions réalisées à l'aide du mécanisme 3DS (lors par exemple d'une transaction de paiement à distance, sur Internet ou autre). Il est ainsi possible d'obtenir des informations encore plus fidèles sur l'état du compte 15 de l'utilisateur UR1.

Un procédé de traitement conforme à un mode de réalisation particulier est à présent décrit en référence aux figures **5A-5B, 6A-6B****,** **7****,** **8A-8B** et **9****.** Plus particulièrement, le terminal T illustré en **figures 1-3** exécute le programme d'ordinateur PG2 pour mettre en oeuvre le procédé de traitement selon un mode de réalisation particulier.

Les **figures 5A** et **5B** sont des vues représentant schématiquement les fichiers d'historisation LG1 et LG2 mentionnés ci-avant. Dans cet exemple, le premier fichier d'historisation LG1 et le deuxième ficher d'historisation LG2 comportent chacun un nombre prédéfini d'emplacements (ou zones mémoire), chacun de ces emplacements étant dédié au stockage d'une entrée constituée par des données d'historique DH représentatives d'une unique transaction traitée par la carte à puce 2.

Plus précisément, on suppose ici que le premier fichier d'historisation LG1 comprend 8 zones mémoire LG1a, chacune d'elles étant configurée pour stocker une entrée RC respective. La **figure 5A** représente un exemple où les 8 zones LG1a contiennent chacune une entrée respective notée de RC₁ à RC₈. Chaque entrée RC comprend des données d'historique DH conformes au premier format FT1 de données.

De même, on suppose ici que le deuxième fichier d'historisation LG2 comprend 16 zones mémoire LG2a, chacune d'elles étant configurée pour stocker une entrée RD respective. La **figure 5B** représente un exemple où seules 5 des 16 zones LG2a disponibles contiennent une entrée respective notée de RD₁ à RD₅. Chaque entrée RD dans le deuxième fichier d'historisation LG2 comprend des données d'historique DH conformes au deuxième format FT2 de données.

D'autres organisations et représentations des premier et deuxième fichiers d'historisation LG1, LG2 sont toutefois possibles.

Comme indiqué par la suite, des compteurs 40 et 42 sont symbolisés dans les **figures 5A** et **5B** pour représenter une position courante de lecture dans les fichiers d'historisation LG1 et LG2, respectivement. Le terminal T est apte à spécifier à la carte à puce 2 une entrée RC ou RD qu'il souhaite lire parmi les différentes zones LG1a, LG2a disponibles.

Par ailleurs, comme déjà indiqué, le deuxième format de données FT2 est un format compressé, c'est-à-dire réduit en taille par rapport au premier format de données FT1. Il s'ensuit que le deuxième format FT2 autorise l'enregistrement d'une quantité inférieure de données par rapport au premier format FT1. Dans cet exemple, le deuxième format FT2 ne permet de stocker que certaines des données d'historisation définies par le premier format de données FT1.

Les **figures 6A** et **6B** représentent schématiquement des données d'historisation DH conformes respectivement aux formats de données FT1 et FT2.

Plus précisément, la **figure 6A** représente une entrée RC du premier fichier d'historisation LG1, cette entrée RC comprenant une pluralité de données d'historisation notés DH1 à DH6 caractérisant une même transaction traitée par la carte à puce 2. On suppose que chacune des données DH1 à DH6 est caractérisée par une valeur et correspond à un type de données d'historisation distinct. Ces données DH1 à DH6 peuvent comprendre par exemple au moins l'un parmi les types de données suivants :
- instant (par exemple une date et/ou une heure) au cours duquel la transaction a été traitée ;
- la monnaie de la transaction ;
- montant de la transaction ;
- au moins un cryptogramme prédéfini ;
- contrôles sécuritaires réalisés par la carte à puce 2 lors du traitement de la transaction ;
- les résultats des contrôles sécuritaires ; et
- le résultat (ou statut) de la transaction (acceptée, refusée...).

Selon un exemple particulier, les types de données prévus par le premier format FT1 de données sont définis par la norme applicable VISA ou MASTERCARD.

Selon un exemple particulier, le premier format FT1 de données (ou « *Log format* » en anglais) est conforme à la norme suivante pour produit CPA (pour « Common Payment Application ») : « EMV Integrated Circuit Card, Spécifications for Payment Systems, Common Payment Application Spécification », Version 1.0 décembre 2005.

L'homme du métier peut toutefois adapter notamment le nombre et la nature des types de données inclus dans le format FT1 selon le cas d'espèce.

De plus, la **figure 6B** représente une entrée RD du deuxième fichier d'historisation LG2, caractérisant une transaction traitée par la carte à puce 2. Cette entrée RD comprend seulement une ou certaines des données DH1-DH6 définies par le premier format FT1. Dans cet exemple, l'entrée RD conforme au deuxième format FT2 comportent les types de données DH1, DH2 et DH6 mais ne contient pas les types de données DH3, DH4 et DH5 prévus par le premier format FT1. Comme déjà indiqué, chaque type de donnée DH1, DH2, DH6 correspond à une caractéristique de la transaction concernée et présente une valeur particulière.

De manière générale, le premier format FT1 de données définit par exemple une pluralité de types de données (DH1-DH6 par exemple) tandis que le deuxième format FT2 de données définit une sélection (DH1, DH2, DH6 par exemple) parmi ladite pluralité de types de données excluant au moins l'un parmi ladite pluralité de types de données. On suppose ici que les données d'historisation de chaque entrée stockée selon le deuxième format FT2 dans le deuxième fichier d'historisation LG2 comporte ici la même sélection de type de données DH1, DH2 et DH6, bien que d'autres modes de réalisation soient possibles.

On suppose dans cet exemple que le type de données DH1 dans les entrées RC et RD caractérise un instant au cours duquel la transaction correspondante a été réalisée.

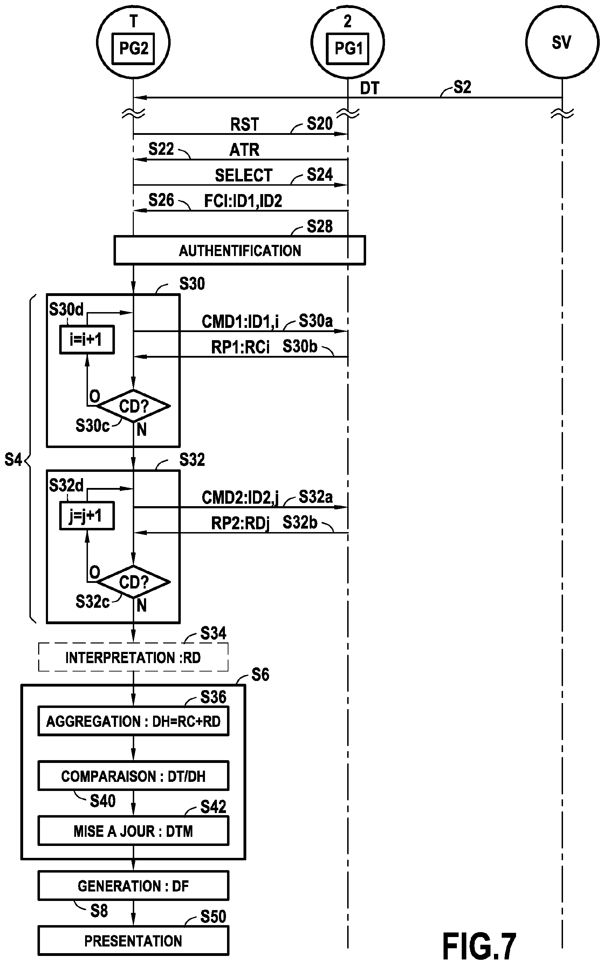

On décrit à présent les étapes réalisées par le terminal T en coopération avec la carte à puce 2 et le serveur distant SV pour mettre en oeuvre le procédé de traitement, selon un exemple de réalisation particulier illustré en **figure 7**.

Au cours d'une étape S2 de réception identique à ce qui est décrit précédemment en référence à la **figure 4**, le terminal T collecte en ligne, depuis le serveur distant SV, des premières données d'historique DT, dites données de compte, représentatives d'au moins une transaction réalisée en association au compte d'utilisateur 15. Ces données de compte DT peuvent spécifier des transactions réalisées à l'aide de la carte à puce 2 et/ou par d'autres moyens.

Par ailleurs, le terminal T procède à une étape S4 de communication en sans contact avec la carte à puce 2, comme déjà décrit précédemment. Pour ce faire, le terminal T réalise ici les étapes S20 à S32 décrites ci-dessous. Cette communication S4 est par exemple initiée en positionnant la carte à puce 2 dans le champ de détection de l'interface sans contact 26 du terminal T.

Dans cet exemple, le terminal T communique avec la carte à puce 2 selon le protocole EMV afin de lire les données d'historique DH stockées localement dans la carte à puce 2, c'est-à-dire dans les fichiers d'historisation LG1 et LG2. Pour ce faire, le terminal T et la carte à puce 2 s'échange des commandes APDU prévues par la norme EMV.

Plus spécifiquement, le terminal envoie (S20) à la carte à puce 2 une commande RST (pour « *Reset* ») et reçoit (S22) en réponse une commande « ATR » (pour « *Answer To Reset* »). Le terminal T envoie (S24) ensuite une commande SELECT à la carte à puce 2 et reçoit (S26) en réponse un message « FCI » (pour « *File Control Information* ») comportant un identifiant ID1 du premier fichier d'historisation LG1 et un identifiant ID2 du deuxième fichier d'historisation LG2. La fourniture de ces identifiants ID1 et ID2 vise à permettre au terminal T de lire le contenu des fichiers LG1 et LG2 correspondants.

Le terminal T peut éventuellement réaliser une étape S28 d'authentification auprès de la carte C pour que cette dernière puisse vérifier que le terminal T a bien le droit de l'interroger.

Le terminal T réalise ensuite une première lecture S30 au cours de laquelle il consulte le premier fichier d'historisation LG1 de la carte à puce 2 pour récupérer des données d'historique DH stockées dans le premier format FT1 de données. Le terminal T réalise également une deuxième lecture S32 au cours de laquelle il consulte le deuxième fichier d'historisation LG2 de la carte à puce 2 pour récupérer des données d'historique DH stockées dans le deuxième format FT2 de données, ce format FT2 étant réduit en taille par rapport au premier format FT1 de données comme déjà indiqué. Divers modes de réalisation sont possibles.

Lors des première et deuxième lectures S30, S32, on suppose que le terminal lit une à une chaque entrée RC, RD dans respectivement les fichiers d'historisation LG1, LG2 tant que l'entrée lue correspond à une transaction satisfaisant une condition temporelle prédéterminée, de sorte que les données d'historique DH récupérées en S4 satisfont la condition temporelle prédéterminée.

Plus précisément, au cours de la première lecture S30, le terminal T envoie (S30a) à la carte à puce 2 une commande de lecture CMD1 comportant l'identifiant ID1 du premier fichier d'historisation LG1 et un identifiant (ou indice) i correspondant à l'entrée RCᵢ que le terminal T souhaite lire dans le fichier LG1, i étant un entier compris entre 1 et 8 dans cet exemple. En réponse, le pointeur 40 (**figure 5A**) est positionné en correspondance avec l'entrée RCᵢ dans le premier fichier d'historisation LG1 et le terminal T reçoit (S30b) l'entrée RCᵢ demandée. La valeur initiale de l'identifiant i peut être choisie d'une quelconque façon appropriée par le terminal T. Dans un exemple particulier, lorsque la première lecture S30 est initiée, le compteur de lecture 40 du premier fichier d'historisation LG est fixé en correspondance avec l'entrée la plus récente, par exemple l'entrée RC1, d'autres implémentations étant toutefois possibles.

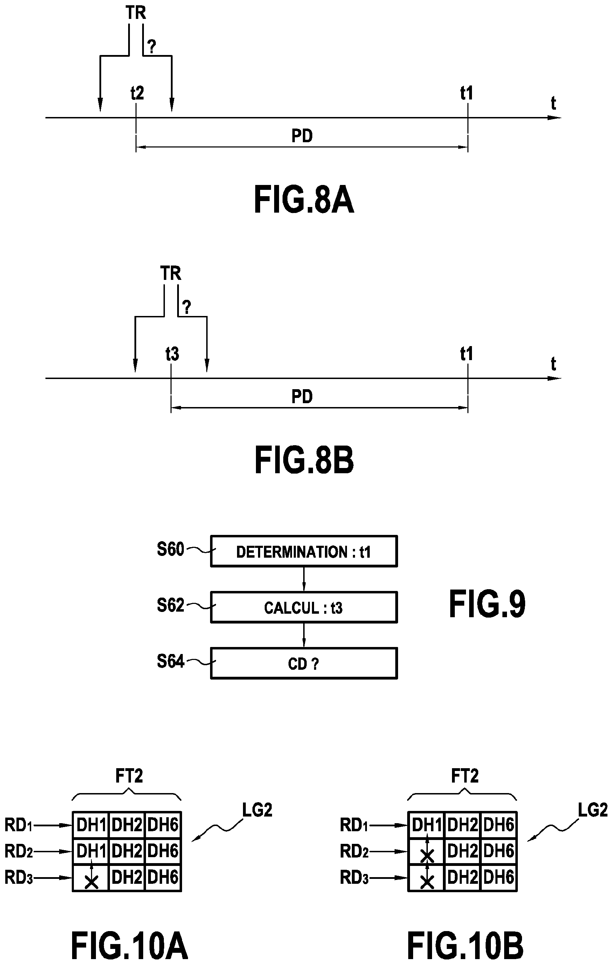

Une fois obtenue (S30b), le terminal T détermine (S30c) si cette entrée RCᵢ remplit une condition temporelle CD prédéterminée. Pour ce faire, le terminal T consulte par exemple la donnée d'historisation DH1 de l'entrée RCᵢ qui caractérise l'instant au cours duquel a été réalisée la transaction concernée. Des exemples de condition temporelle CD sont décrits plus en détail en référence aux **figures 8A** et **8B****.** Si la condition temporelle CD est remplie (S30c), le terminal T détecte que la première lecture S30 doit se poursuivre et procède par conséquent à l'étape S30d. Sinon, la première lecture S30 s'achève et le procédé se poursuit avec la deuxième lecture S32.

Au cours de l'étape S30d, le terminal T incrémente l'identifiant i (ou, en variante, le décrémente) puis réalise une nouvelle itération des étapes S30a-30c pour lire l'entrée RCᵢ₊₁ (ou RCᵢ₋₁) dans le premier fichier d'historisation LG1. La première lecture S30 est ainsi réalisée par incrémentation (ou décrémentation) successive en partant d'une entrée RC initiale, par exemple l'entrée la plus récente ou l'entrée la plus ancienne.

Le terminal T lit ainsi une à une chaque entrée RC dans le premier fichier d'historisation LG1 tant que l'entrée RC lue en S30a-S30b correspond à une transaction satisfaisant la condition temporelle CD. Si le terminal T reçoit en S30b un message d'erreur, il en déduit que l'entrée RC demandée n'existe pas dans le premier fichier d'historisation LG1 et met donc fin à la première lecture S30 pour passer à la deuxième lecture S32.

Le terminal T réalise la deuxième lecture S32 de façon analogue à la première lecture S30. Plus précisément, au cours de la deuxième lecture S32, le terminal T envoie (S32a) à la carte à puce 2 une commande de lecture CMD2 comportant l'identifiant ID2 du deuxième fichier d'historisation LG2 et un identifiant (ou indice) j correspondant à l'entrée RDⱼ que le terminal T souhaite lire dans le fichier LG2, j étant un entier compris entre 1 et 16 dans cet exemple. En réponse, le pointeur 42 (**figure 5B**) est positionné en correspondance avec l'entrée RDⱼ dans le deuxième fichier d'historisation LG2 et le terminal T reçoit (S32b) l'entrée RDⱼ demandée. La valeur initiale de l'identifiant j peut être choisie d'une quelconque façon appropriée par le terminal T. Dans un exemple particulier, lorsque la deuxième lecture S32 est initiée, le compteur de lecture 42 du premier fichier d'historisation LG est fixé en correspondance avec l'entrée la plus récente, par exemple l'entrée RD1, d'autres implémentations étant toutefois possibles.

Une fois obtenue (S32b), le terminal T détermine (S32c) si cette entrée RDⱼ remplit une condition temporelle CD prédéterminée. Pour ce faire, le terminal T consulte par exemple la donnée d'historisation DH1 de l'entrée RDⱼ qui caractérise l'instant au cours duquel a été réalisée la transaction concernée. On suppose dans cet exemple que cette condition temporelle CD est identique à celle prise en compte à l'étape S30c lors de la première lecture S30, bien que des variantes soient possibles. Si la condition temporelle CD est remplie (S32c), le terminal T détecte que la deuxième lecture S32 doit se poursuivre et procède par conséquent à l'étape S32d. Sinon, la deuxième lecture S32 s'achève et le terminal procède à l'étape S6 d'analyse.

Au cours de l'étape S32d, le terminal T incrémente l'identifiant j (ou, en variante, le décrémente) puis réalise une nouvelle itération des étapes S32a-32c pour lire l'entrée RCⱼ₊₁ (ou RCⱼ₋₁) dans le deuxième fichier d'historisation LG2. La deuxième lecture S32 est ainsi réalisée par incrémentation (ou décrémentation) successive en partant d'une entrée RC initiale, par exemple l'entrée la plus récente ou l'entrée la plus ancienne.

Le terminal T lit ainsi une à une chaque entrée RD dans le deuxième fichier d'historisation LG2 tant que l'entrée RD lue en S32a-S32b correspond à une transaction satisfaisant la condition temporelle CD. Si le terminal T reçoit en S32b un message d'erreur, il en déduit que l'entrée RD demandée n'existe pas dans le deuxième fichier d'historisation LG2 et met donc fin à la première lecture S30 en passant à l'étape S6 d'analyse.

Comme déjà indiqué, la prise en compte d'une condition temporelle CD lors des première et deuxième lectures S30, S32 permet avantageusement au terminal de limiter le volume de données d'historique récupéré lors de l'étape S4 de communication, et donc d'accélérer le processus de lecture et de diminuer les ressources requises au niveau du terminal T et de la carte à puce 2. Le terminal T peut ainsi récupérer uniquement les données d'historique DH pertinentes, c'est-à-dire celles correspondant aux transactions les plus récentes qui sont susceptibles de ne pas avoir encore été prises en compte à ce stade dans les données de compte DT du compte d'utilisateur 15. Le terminal T récupère par exemple en S4 toutes les données d'historique DH correspondant à des transactions réalisées dans le mois calendaire courant ou dans un période glissante d'un mois terminant à la date courante.

Toujours en référence à la **figure 7**, le terminal T réalise ensuite une étape S6 d'analyse comme déjà décrit en référence à la **figure 4**. Dans une variante décrite ultérieurement, une étape S34 d'interprétation est réalisée préalablement à l'étape S6 d'analyse.

Plus précisément, au cours de cette étape S6 d'analyse, le terminal T agrège (ou combine) en S36 les données d'historisation DH pertinentes de la carte à puce 2 à partir des entrées RC et RD lues (S4) dans les fichiers LG1 et LG2. Dans cet exemple, toutes les entrées ainsi regroupées en S36 satisfont la condition temporelle CD.

Le terminal T compare (S40) ensuite les données d'historique DH de la carte à puce 2 obtenues en S36 avec les données de compte DT obtenues en S2. Cette comparaison vise ici à identifier les différences entre les données d'historisation DH de la carte à puce 2 et les données de compte DT.

Au cours d'une étape S42 de mise à jour, le terminal T met ensuite à jour les données de compte DT à partir de la comparaison réalisée en S40, de sorte à obtenir des données d'historique DTM à jour.

En particulier, le terminal T peut déterminer en S40 si au moins une entrée RC et/ou RD lue dans la carte à puce 2 correspond à une nouvelle transaction qui n'est pas spécifiée dans les données de compte DT provenant du serveur distant SV. Si tel est le cas, le terminal T met à jour (S42) les données de compte DT en y ajoutant les données d'historique DH (entrées RC et/ou RD) de la carte à puce 2 correspondant à chaque nouvelle transaction ainsi identifiée.

Une fois l'étape S6 d'analyse achevée, le terminal T peut générer, au cours d'une étape S8 de génération, des données DF de suivi de transaction comme déjà décrit ci-avant en référence à la **figure 4**. Pour ce faire, le terminal T peut réaliser un quelconque traitement approprié à partir des données d'historique DTM à jour. Ces données DF de suivi de transaction sont représentatives d'un état courant du compte d'utilisateur 15. Dans un exemple particulier, ces données de suivi de transaction DTM comprennent un solde courant du compte d'utilisateur 15. Ce solde est obtenu en additionnant les montants de transactions récentes à un ancien solde spécifié dans les données de compte DT. Dans un exemple particulier, les données DF de suivi de transaction comprennent une liste à jour de transactions réalisée dans une période de temps donnée en association avec le compte 15.

Par ailleurs, dans l'exemple décrit ci-dessus en référence à la **figure 7**, on a supposé que chaque entrée RD stockée selon le deuxième format FT2 dans le deuxième fichier d'historisation LG2 comporte la même sélection de type de données DH1, DH2 et DH6. D'autres exemples sont toutefois envisageables. En particulier, comme indiqué ci-après, les entrées RD susceptibles d'être stockées dans le deuxième fichier d'historisation LG2 selon le deuxième format FT2 peuvent par exemple contenir des sélections variables parmi les types de données DH1-DH6 prévus par le format FT1.

Selon un exemple particulier, chaque entrée RDᵢ dans le fichier LG2 comporte par exemple une sélection d'au moins un type de données (parmi DH1-DH6) qui est fonction du contenu de l'entrée RDᵢ₋₁ (ou RDᵢ₊₁) précédente représentative d'une transaction précédente. Autrement dit, au moins une entrée RD dans le deuxième fichier d'historisation LG2 peut être codée à partir du contenu de l'entrée RD immédiatement précédente (ou connexe) ou à partir du contenu d'une entrée RD précédente (éventuellement non-connexe). Dans ce cas, la deuxième lecture S32 (**figure 7**) des entrées RD dans le deuxième fichier d'historisation LG2 nécessite une étape d'interprétation conformément à des règles de codage prédéfinies pour déduire, à partir du contenu d'une précédente entrée (RDᵢ₋₁ ou RDᵢ₊₁ par exemple), le contenu de l'entrée RDᵢ.

Selon un exemple particulier, le codage du format compressé FT2 est tel qu'une entrée donnée RDᵢ dans le fichier d'historisation LG2 contient un type de données prédéfini (DH₁ par exemple) seulement si la plus récente entrée RD (RDᵢ₋₁ ou RDᵢ₋₂ par exemple), antérieure à l'entrée RDᵢ et comportant le type de données prédéfini, spécifie pour ce type de données prédéfini une valeur différente de celle de la transaction correspondant à l'entrée RDᵢ. Par exemple, comme représenté en **figure 10A**, l'entrée RD₃ dans le fichier d'historisation LG2 ne contient pas le type de données DH1 (par exemple l'instant au cours duquel a été réalisé la transaction, ou la monnaie utilisée dans la transaction) si l'entrée immédiatement précédente RD₂ spécifie pour ce type de données DH1 la même valeur (même date, même monnaie...) que pour l'entrée RD₃. De la même manière, comme représenté en **figure 10B**, l'entrée RD₃ dans le fichier d'historisation LG2 ne contient pas le type de données DH1 si l'entrée immédiatement précédente RD₂ ne contient pas le type de données DH₁ et que l'entrée encore antérieure RD₁ spécifie pour ce type de données DH1 la même valeur que pour l'entrée RD₃, et ainsi de suite. Pour interpréter la valeur d'un type de donnée qui n'est pas présent dans une entrée RD stockée selon le deuxième format FT2 dans le fichier LG2, il faut par conséquent se reporter à l'entrée antérieure la plus proche dans le temps qui comporte ce type de données. Dans le cas de la **figure 10B** par exemple, les entrées RD₂ et RD₃ doivent donc être interprétées comme ayant la même valeur que l'entrée RD₁ pour le type de données DH1. D'autres implémentations sont possibles selon l'organisation choisie pour stocker les entrées RD dans le deuxième fichier d'historisation LG2.

De manière générale, le deuxième fichier d'historisation LG2 peut comprendre au moins une première entrée RD, correspondant à une première transaction, et au moins une deuxième entrée RD antérieure correspondant à une deuxième transaction antérieure à la première transaction, la première entrée RD étant codée selon le deuxième format FT2 de données à partir du contenu de ladite au moins une deuxième entrée RD, la deuxième lecture S32 étant suivi d'une étape S34 d'interprétation de la première entrée RD récupérées dans le deuxième format FT2 de données, à partir de ladite deuxième entrée RD (**figure 7**).

En enregistrant un type de donnée dans le deuxième fichier d'historisation LG2 pour une transaction uniquement lorsque la valeur correspondante diffère par rapport à une précédente transaction, il est possible de gagner encore plus d'espace mémoire dans la carte à puce 2 sans perdre d'informations utiles. Comme plusieurs transactions successives présentent souvent des caractéristiques communes (même date, même monnaie...), on évite de stocker des informations redondantes dans le fichier d'historisation secondaire LG2 de la carte à puce 2. Une entrée stockée dans le second fichier d'historisation LG2 peut s'interpréter à partir de l'entrée immédiatement précédente, ou à partir d'une autre entrée précédente, dans ce fichier LG2.

En particulier lorsque les types des données d'historisation dans le deuxième fichier d'historisation LG2 sont susceptibles de varier, il est avantageux d'inclure dans chaque entrée RD un champ (non représenté sur les figures) indiquant les types de données inclus (par exemple dans un entête de l'entrée).

Par ailleurs, comme déjà indiqué, la condition temporelle CD appliquée au cours des première et deuxième lectures S30, S32 (**figure 7**), ou plus généralement au cours de l'étape S4 de communication (**figure 4**), peut être adaptée selon le cas d'espèce.
La **figure 8A** représente la mise en oeuvre de cette condition temporelle CD selon un premier exemple de réalisation. Dans cet exemple, l'instant t1 désigne un instant courant au cours duquel le procédé de traitement est mis en oeuvre par le terminal T. Plus précisément, le terminal T détecte (S30c, S32c) que des données d'historique DH lues dans la carte à puce 2 satisfont la condition temporelle CD si ces données d'historique DH sont représentatives d'une transaction TR réalisée à un instant postérieur à un instant t2 fixe prédéterminé. Cet instant t2 est par exemple défini par une date et/ou une heure (premier jour d'un mois calendaire par exemple).
La **figure 8B** représente la mise en oeuvre de cette condition temporelle CD selon un deuxième exemple de réalisation. Dans cet exemple, l'instant t1 désigne un instant courant au cours duquel le procédé de traitement, ou plus particulièrement l'étape S4 de communication, est mis en oeuvre par le terminal T. Plus précisément, le terminal T détecte (S30c, S32c) que des données d'historique DH lues dans la carte à puce 2 satisfont la condition temporelle CD si ces données d'historique DH sont représentatives d'une transaction TR réalisée à un instant se trouvant dans une période de temps PD, d'une durée prédéfinie, terminant à l'instant courant t1.

Cette période PD constitue une fenêtre temporelle glissante dont la borne de fin est définie par l'instant courant t1 et dont la durée prédéfinie peut être choisie de façon appropriée selon le cas d'espèce (exemple : période d'1 mois).

La **figure 9** représente, selon un exemple particulier, la vérification réalisée par le terminal T pour déterminer en S30c et S32c (**figure 7**) si la condition temporelle CD telle que définie ci-dessus en référence à la **figure 8B** est remplie.

Au cours d'une étape S60 de détermination, le terminal T détermine l'instant courant t1. Pour ce faire, le terminal T1 consulte une horloge interne ou reçoit une indication temporelle depuis le serveur distant SV par exemple.

Le terminal T calcule (S62) ensuite un instant t3 (**figure 8B**) antérieur dans le temps à l'instant courant t1, cet instant t3 correspondant au début de la période de temps PD prédéfinie. Ce calcul S62 est réalisé à partir de la valeur de l'instant courant t1 et de la durée prédéfinie attribuée à la période de temps PD prédéfinie (t3 = t1 - PD).

Le terminal T détecte (S64) que la transaction TR en question a été réalisée dans la période de temps PD glissante si les données d'historique DH correspondantes indiquent que la transaction a été réalisée à un instant postérieure à l'instant t3.

A noter d'autre part que l'ordre dans lequel s'enchaînent les étapes du procédé de traitement tel que décrits précédemment en référence notamment aux **figures 4** et **7** ne constitue qu'un exemple de réalisation, des variantes étant possibles. En particulier, il est possible de réaliser l'étape S2 de collecte après l'étape S4 de communication (**figures 4** et **7**) ou encore de réaliser la deuxième lecture S32 avant la première lecture S30 (**figure 7**).

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de traitement mis en oeuvre par un terminal (T), ledit procédé comprenant les étapes suivantes :
- collecte (S2) en ligne, depuis un serveur distant (SV), de premières données d'historique (DT) représentatives d'au moins une transaction associée à un compte d'utilisateur ;
- communication (S4) en sans contact avec une carte à puce (2) au cours de laquelle le terminal récupère des deuxièmes données d'historique (DH) stockées localement dans une mémoire de la carte à puce, lesdites deuxièmes données d'historique étant représentatives d'au moins une transaction traitée par la carte à puce en association avec le compte d'utilisateur ;
- analyse (S6) au cours de laquelle le terminal agrège les premières données d'historique avec les deuxièmes données d'historique pour obtenir des données d'historique à jour ; et
- génération (S8) de données de suivi de transaction à partir des données d'historique à jour.

2. Procédé selon la revendication 1, dans lequel l'étape d'analyse comprend :
- comparaison (S40) des premières données d'historique collectées en ligne avec les deuxième données d'historique récupérés lors de l'étape de communication pour détecter au moins une nouvelle transaction dans les deuxièmes données d'historique qui n'est pas incluse dans les premières donnés de transaction ; et
- agrégation (S42) des données d'historique de ladite au moins une nouvelle transaction avec les premières données d'historique de sorte à obtenir les données d'historique (DTM) à jour.

3. Procédé selon la revendication 1 ou 2, dans lequel les deuxièmes données d'historique récupérées lors de l'étape de communication satisfont une condition temporelle prédéterminée.

4. Procédé selon l'une quelconque des revendications 1 à 3, dans lequel les données de suivi de transactions sont représentatives d'un état courant du compte d'utilisateur.

5. Procédé selon l'une quelconque des revendications 1 à 4, dans lequel le terminal est un terminal de communication apte à recevoir des messages SMS selon le protocole de paiement 3DS,
le procédé comprenant une étape de réception de troisièmes données d'historique par l'intermédiaire d'au moins un message SMS ;
dans lequel, lors de l'étape d'analyse, les premières données d'historique sont agrégées avec les deuxièmes et troisièmes données d'historique.

6. Procédé selon l'une quelconque des revendications 1 à 5, dans lequel l'étape de communication comprend :
- une première lecture au cours de laquelle le terminal consulte un premier fichier d'historisation de la carte à puce pour récupérer des deuxièmes données d'historique stockées dans un premier format de données ; et
- une deuxième lecture au cours de laquelle le terminal consulte un deuxième fichier d'historisation de la carte à puce pour récupérer des deuxièmes données d'historique stockées dans un deuxième format de données, réduit en taille par rapport au premier format de données.

7. Procédé selon la revendication 6, dans lequel le premier fichier d'historisation comprend au moins une entrée comportant des deuxièmes données d'historique, selon le premier format de données, représentatives d'une transaction respective,
dans lequel le deuxième fichier d'historisation comprend au moins une entrée comportant des deuxièmes données d'historique, selon le deuxième format de données, représentatives d'une transaction respective ;
dans lequel, lors des première et deuxième lectures, le terminal lit une à une chaque entrée dans le premier fichier d'historisation et dans le deuxième fichier d'historisation tant que l'entrée lue correspond à une transaction satisfaisant une condition temporelle prédéterminée, de sorte que les deuxièmes données d'historique récupérées lors de l'étape de communication satisfont la condition temporelle prédéterminée.

8. Procédé selon la revendication 7, dans lequel le terminal détecte que des deuxièmes données d'historique satisfont la condition temporelle si elles sont représentatives d'une transaction réalisée à un instant postérieur à un instant fixe prédéterminée.

9. Procédé selon la revendication 7, dans lequel le terminal détecte que des deuxièmes données d'historique satisfont la condition temporelle si elles sont représentatives d'une transaction réalisée à un instant se trouvant dans une période de temps, d'une durée prédéfinie, terminant à un instant courant au cours duquel est réalisée l'étape de communication.

10. Procédé selon l'une quelconque des revendications 6 à 9, dans lequel le deuxième fichier d'historisation stocké dans la carte à puce comprend au moins une première entrée, correspondant à une première transaction, et au moins une deuxième entrée antérieure correspondant à une deuxième transaction antérieure à la première transaction, la première entrée étant codée selon le deuxième format de données à partir de ladite au moins une deuxième entrée,
la deuxième lecture comprenant une étape d'interprétation de la première entrée récupérée dans le deuxième format de données, à partir de ladite au moins une deuxième entrée.

11. Procédé selon l'une quelconque des revendications 1 à 10, dans lequel lesdites données d'historique caractérisent des transactions de paiement.

12. Programme d'ordinateur (PG1) comportant des instructions pour l'exécution des étapes d'un procédé selon l'une quelconque des revendications 1 à 11 lorsque ledit programme est exécuté par un ordinateur.

13. Support d'enregistrement lisible par un ordinateur sur lequel est enregistré un programme d'ordinateur (PG1) comprenant des instructions pour l'exécution des étapes d'un procédé selon l'une quelconque des revendications 1 à 11.

14. Terminal comprenant :
- un module de collecte (MD2) configuré pour collecter en ligne, depuis un serveur distant, des premières données d'historique représentatives d'au moins une transaction associé à un compte d'utilisateur ;
- un module de communication (MD4) configuré pour communiquer en sans contact avec une carte à puce (C) pour récupérer des deuxièmes données d'historique stockées localement dans une mémoire de la carte à puce, lesdites deuxièmes données d'historique étant représentatives d'au moins une transaction traitée par la carte à puce en association avec le compte d'utilisateur ;
- un module d'analyse (MD6) configuré pour agréger les premières données d'historique avec les deuxièmes données d'historique pour obtenir des données d'historique (DTM) à jour ; et
- un module de génération (MD8) configuré pour générer des données de suivi de transaction (DF) à partir des données d'historique (DTM) à jour.
